# EUROPEAN PATENT SPECIFICATION

(11) **EP 2 192 381 B1**
(45) Date of publication and mention of the grant of the patent: **21.11.2012**
(21) Application number: 08170318.3
(22) Date of filing: 28.11.2008
(51) Int. Cl.: G01B 21/14

(54) **A method of measuring cylinder liner diameter in a two-stroke crosshead internal combustion engine and a diameter gauge device for use in the method.**
Verfahren zum Messen des Zylinderlaufbuchsendurchmessers in einem Zweitakt-Kreuzkopf-Verbrennungsmotor und Durchmessermessvorrichtung zur Verwendung mit dem Verfahren.
Procédé pour la mesure du diamètre du revêtement interne d'un cylindre dans un moteur à combustion interne à deux temps à crosse et dispositif de jauge du diamètre pour ledit procédé.

(43) Date of publication of application: 02.06.2010
(73) Proprietor: Rosenskjold, John, 2942 Skodsborg (DK); Rosenskjold, Gitte, 2942 Skodsborg (DK)
(72) Inventor: Rosenskjold, John, 2942 Skodsborg (DK); Madsen, Ernst, 3550 Slangerup (DK); Rosenskjold, Gitte, 2942 Skodsborg (DK); Bölling, Sven, 2840 Holte (DK)
(74) Representative: Indahl, Peter Jensen

(56) References cited:
- EP-A- 0 438 360
- US-A- 3 090 125

## Description

The present invention relates to a method of measuring cylinder liner diameter in a two-stroke crosshead internal combustion engine where the engine is taken out of operation, a diameter gauge device is introduced into the cylinder liner through a scavenge air port in the cylinder liner and is placed in a measuring position, at which the inner diameter of the cylinder liner is measured.

In large two-stroke crosshead internal combustion engines it is important to keep record of the cylinder wear. During operation of the engine the pressure in the combustion chamber causes the piston rings to be pressed in radial direction out against the inner surface of the cylinder liner, and the piston ring load on the cylinder liner may cause cylinder wear. It is important for the maintenance of the engine to keep track of the cylinder wear over time, and in order to establish records of this there is periodically performed a measurement of the actual wear conditions of the individual cylinder liners in the engine. The cylinder wear is typically measured at times when the engine is stopped for overhaul or service of other components on the engine. However, engine developments go in direction of longer periods between service.

Large two-stroke engines are typically used as main engines on ships, and for many kinds of ships the time in port is rather short, and for container ships typically of a duration of about 5 hours. Such a short time is presently insufficient for measuring the cylinder liner wear of the cylinders in the engine.

US patent 3,090,125 discloses a measuring device comprising a elongated base member and an adjustable rod pivotally connected thereto which may be partially inserted through a scavenge air port in a cylinder liner. The device has mechanical adjusting means to shorten and increase the length of said rod, and other mechanical means operable to swing said rod relative to said member. The measuring device is adapted to be partly inserted into the cylinder liner through a scavenge air port and to be operated from the outside. When a measurement is made the device is removed.

The commonly used methods of measuring the cylinder liner wear on two-stroke crosshead engines are based on dismantling the cylinder liner cover or the exhaust valve housing in order to obtain an access hole of sufficient size in the top of the cylinder liner to lower the diameter gauge device down into the cylinder liner and perform the measurements of the diameters at various height positions in the cylinder liner.

DK patent 152 628 discloses a diameter gauge device adapted for measuring the inner diameter of a cylinder liner after the cylinder cover has been dismantled and removed. The diameter gauge device comprises a frame portion having two supporting legs at one end and a measuring probe positioned diametrically opposite the two supporting legs. The frame portion is provided a handle positioned relatively close to the end of the supporting legs and a dial gauge mechanically connected to the measuring probe. When the diameter gauge device has been lowered into the cylinder liner by means of the handle or a cord, the supporting legs and the measuring probe abuts the cylinder liner and serves as reference point for taking the measurement, which is displayed on the dial gauge and read visually by the person handling the diameter gauge device.

The published Japanese patent application JP 2007-248303 A discloses a bore measurement instrument that is lowered down into the cylinder after dismantling and removal of the exhaust valve on the cylinder. The bore measurement instrument comprises an elongate basis provided with two pairs of at least three foldable holding arms adapted to be brought into contact with the inner wall of the cylinder. A measurement arm having measurement sensors is provided between the holding arms. The holding arms and the measurement arm are placed in active position after lowering of the bore measurement instrument down into the cylinder bore so as to keep it in position and to conduct a measurement of the cylinder diameter.

It is known from prior art, such as published Japanese patent application JP 2003-194506 A2 to measure the cylinder bore of small engines by inserting a measuring device through the mounting hole for a fuel injector in a cylinder cover. The measuring device is hand-held and is articulated with one arm being swung out to contact the inner wall of the cylinder. The insertion hole is oblique with respect to the central axis of the cylinder, and thus it is only possible to measure cylinder diameters in the upper portion of the cylinder, and in a restricted area thereof.

WO 99/15853 discloses a device for measuring a diameter of a cylinder liner. The exhaust valve housing must be dismantled and removed from the cylinder cover prior to using the device. The device comprises a suspension unit which is placed on top of the cylinder cover, and a measuring unit comprising an upper ring with three support legs and a lower ring with a measuring rod. The measuring unit is via three straps lowered down into the cylinder liner, suspended in the straps from the suspension unit.

It is a purpose of the present invention to facilitate wear measurements on cylinder liners in a two-stroke crosshead engine while the latter is temporarily taken out of operation. And it is in particular a purpose to perform such wear measurements in a fast manner, preferably so fast that regular port operations provide the time required to perform the wear measurements on a cylinder liner.

With a view to this the method according to the present invention as disclosed in claims 1 to 7 is characterized in that the engine is a long-stroke engine where the relationship between stroke and bore is at least 2.4, that a piston in the bottom dead centre position is located just below scavenge air ports in a lower portion of the cylinder liner, that the diameter gauge device is placed on top of the piston and is moved up past the scavenging air ports in the height direction of the cylinder liner by turning the crankshaft of the engine, that the diameter gauge device is shifted to at least one another position along the length of the cylinder liner, which one another position is in an upper portion of the cylinder liner at a top dead centre position of the piston, that the diameter gauge device performs measurement of the inner diameter of the cylinder liner at said one another position, that the diameter gauge device in the individual measuring positions obtains the measured diameter as a first electronic parameter representative of the diameter, and that the corresponding height position of the diameter gauge device within the cylinder is measured.

The two-stroke crosshead internal combustion engines of the type relevant to the present invention are uniflow scavenged engines where the individual cylinder liner is provided with a circumferential row of scavenge air ports in the lower portion of the cylinder liner and a single exhaust valve located centrally in the cylinder cover mounted on top of the cylinder liner. At the end of the combustion stroke the piston moves down past the scavenge air ports and the exhaust valve opens, so that scavenge and inlet air flows up through the cylinder liner and cleans combustion gases out of the combustion chamber. The scavenge air thus flows in one direction from the bottom to the top of the cylinder liner during the scavenging process. The scavenge air ports have opening areas of considerable size in order to permit a sufficient flow of pressurised air into the cylinder liner while the exhaust valve is open.

The insertion of the diameter gauge device into the cylinder liner through a scavenge air port allows the device to be placed inside the cylinder liner without dismantling the cylinder cover or the exhaust valve housing. The insertion can thus be performed shortly after taking the engine out of operation, and this very significantly shortens the duration of the overall measurement process. In addition, the cylinders of the engine are hardly affected by the measurements, as would otherwise not be the case in the prior art methods where dismantling of large cylinder parts is required.

The diameter gauge device is placed on top of the piston and is moved in the height direction of the cylinder liner by turning the crankshaft of the engine. The piston crown is in this case utilized as a platform supporting the diameter gauge device during the measurements and moving the diameter gauge device up and down within the cylinder liner. The two-stroke crosshead engine typically has a turning wheel connected with the crankshaft, possibly via a thrust shaft, and the turning wheel can via a turning gear be engaged with an electric motor that may be activated to turn the crankshaft while the engine is not in operation.

The diameter gauge device obtains the measured diameter as a first electronic parameter representative of the diameter. This allows the device to store the measured values in an easy manner in a memory for later retrieval after removal of the device from the cylinder liner, or to immediately transmit the measured values to a receiver that transfers the values to a memory in a device outside the cylinder liner. There is thus no necessity for any visual observation of the measurements, and this allows for performing many measurements within the cylinder liner, also after the diameter gauge device has been placed in the upper portion of the cylinder liner for measurements at locations where the wear is typically of the highest values.

The level of pressure within the combustion chamber is high when the piston is near the top of the cylinder liner at the beginning of the combustion stroke, and consequently the piston ring pressure against the inside surface of the cylinder liner is high and at the same time the relative motions between piston rings and cylinder liner are relatively low, which makes it more difficult to maintain sufficient lubrication between piston rings and liner surface. And together with the higher temperatures in the upper portion of the cylinder liner this all in all makes wear most likely in this upper portion. The engines are long-stroke engines where the relationship between stroke and bore (S/B) is at least 2.4, and preferably higher than S/B = 3.0. During measurements in the upper portion of the cylinder liner, the diameter gauge device is located within the liner at a position distant from the scavenge air ports.

Preferably, a height gauge device is used to measure the position of the diameter gauge device within the cylinder liner, which height gauge device obtains the measured distance as a second electronic parameter representative of the distance. The use of a height gauge device in conjunction with the diameter gauge device allows the diameter measurements to be performed without any interfacing with the controls of the internal combustion engine. The height gauge device takes care of measuring the position in height of the diameter gauge device within the cylinder liner as the latter performs the measurements of diameter, and the diameter measurements may thus in a simple manner be related to specific locations on the cylinder liner so that a wear curve of the liner can be drawn or calculated.

In a further development of the method according to the present invention a plurality of corresponding value pairs for the first electronic parameter and the second electronic parameter are recorded, preferably as stored values in a memory. Recording of the corresponding values of the first and second parameters allows for failsafe electronic handling of the data, and if the recording is performed when the devices are located within the cylinder liner during the measurement procedures the whole measurement process becomes self-contained in the sense that communication outside of the cylinder during the procedure is unnecessary. The collected data pairs can be retrieved, such as from the memory, after the devices have been removed from the cylinder liner after completion of the measurements.

The height measurements may be carried out in several different manners. One possibility is to let the height gauge device measure the height from the position of the diameter gauge device within the cylinder liner to the lower surface of the exhaust valve. In this case the height gauge device may be located on or integrated with the diameter gauge device, resulting in a combined device that only needs to be inserted into the cylinder liner is a common operation performed at the scavenge air ports in the lower portion of the cylinder liner. Another possibility is to let the height gauge device measure the height down to the position of the diameter gauge device within the cylinder liner. In this latter case the height gauge device has to be mounted in the upper portion of the cylinder. This may e.g. be effected by mounting the height gauge device in the cylinder cover, such as in an access bore designed for this purpose or in a mounting hole for a fuel injector, after the fuel injector has been removed.

When the height gauge device is mounted in a position in the cylinder cover, the height gauge device extends from outside the cylinder into the combustion chamber and may therefore during the measuring procedure be utilized as a means for transferring data from within the cylinder to equipment located outside the cylinder. One advantage of this is that communication and retrieval of data may be effected despite the fact that the cylinder volume enclosed within the cylinder liner, the piston and the cylinder cover acts as a Faraday cage from with electronic communication is otherwise impossible. In a preferred method the height gauge device is therefore provided with a receiver receiving signals emitted from a transmitter in the diameter gauge device.

Prior to placing the diameter gauge device on top of the piston, a flexible ring or circular plate may be inserted into a scavenge air port and be placed on top of the piston. The flexible ring or circular plate provides a clean surface on which the diameter gauge device may be supported. Use of the flexible ring as a support intermediate the piston crown and the diameter gauge device helps the diameter gauge device in performing small movements unhindered by coke deposits on top of the piston crown. If necessary, larger coke deposits on the piston crown may be levelled out or removed in the areas of support for the diameter gauge device.

As described in the above, the method according to the present invention may involve a detection of the height position within the cylinder liner by the use of the device designed for this purpose. However, it is also possible to obtain the position of the piston in the height direction of the cylinder on basis of the associated turning angle of the crankshaft of the engine in relation to the turning angle of the crankshaft corresponding to a position of the piston in either top dead centre position (TDC) or bottom dead centre position (BDC). When it is know, for a particular cylinder, which turning angle of the crankshaft corresponds to a positioning of the piston in BDC or TDC, it is straightforward to associate any other turning angle of the crankshaft with a corresponding height position of the piston within the cylinder liner. Instead of using BDC or TDC as the reference point, it is also possible to use the position where the piston upper surface is level with either the upper edge or the lower edge of the scavenge air ports. These positions of the piston are readily at hand when the diameter gauge device is inserted through one scavenge air port onto the upper surface of the piston crown.

The present invention also relates to a diameter gauge device as disclosed in claims 8 to 12 capable of measuring the cylinder liner inner diameter in a two-stroke crosshead internal combustion engine, which diameter gauge device comprises a frame structure having two projections extending to one side of the frame structure and an elongate measuring arm extending to the opposite side of the frame structure, which measuring arm is biased for displacement in direction away from the two projections and is connected to a meter that measures the displaced distance of the measuring arm in relation to a predetermined design inner diameter for the cylinder liner.

In this diameter gauge device according to the present invention the measuring arm is associated with a drive capable of retracting the measuring arm to a withdrawn, inactive position for insertion of the diameter gauge device through a scavenging air port and placement on top of a piston; the drive is electronically controlled to displace the measuring arm to the inactive position or to place the measuring arm in an extended position, after movement of the diameter gauge device up past the area of the scavenging air ports, in which extended position the bias on the measuring arm in direction away from the two projections is active; the meter converts the position of the measuring arm, when in the extended position, into a first electronic parameter representative of the diameter; and the diameter gauge device comprises a first temperature sensor measuring the temperature of the diameter gauge device.

The drive retracting the measuring arm to the withdraw, inactive position allows the diameter gauge device to be inserted in a safe manner through the scavenging air port and be manipulated and correctly placed in position on top of the piston. After the placement and movement of the device up past the area of the scavenging air ports the drive may be electronically activated to displace the measuring arm to the extended active position. In this position, the bias on the measuring arm causes the two projections to be moved into abutment on the inner surface of the cylinder liner and to position the diameter gauge device correctly and ready for measurements of the inner diameters of the cylinder liner. The meter converts the diameter into the first electronic parameter, and thus there is no need for any visual reading of the meter. The diameters inside the cylinder liner may thus be read automatically and either stored in the device for later retrieval or transmitted to a receiver. A high accuracy of the measured diameter is achieved by providing the diameter gauge device with a first temperature sensor measuring the temperature of the diameter gauge device. The temperature measurement allows the measurements to be corrected for temperature dependent length changes of the diameter gauge device in the direction measured. This may be relevant when the arm is of a material that exhibits any significant length change with varying temperatures.

In a preferred embodiment the meter is calibrated to measure the diameter with a precision within the range from 0.1 to 0.005 mm, when the inner diameter of the cylinder liner is in the range from 250 mm to 1100 mm. As the cylinder wear is typically progressing only very slowly during many days or years of operation of the engine, it is an advantage to be capable of measuring very small values of wear. When the wear is measured with an accuracy of e.g. 0.01 mm despite the large cylinder liner diameters of e.g. 60, 80 or 90 cm, it is possible to detect abnormal wear at an early stage and take any corrective measures needed in the operating conditions of the cylinder, such as dosing a larger amount of cylinder lubrication oil, servicing the piston rings or treating the inner surface of the cylinder liner.

In another or further embodiment the diameter gauge device comprises at least one second temperature sensor for measuring the temperature of the inner surface of the cylinder liner. An advantage of this embodiment is that the diameter gauge device may be inserted into a cylinder liner and measure the diameter of the same shortly after the engine has been taken out of operation. The temperature measurement of the cylinder liner makes it possible to compensate the measurement for variations caused by varying temperatures of the cylinder liner material. In the prior art measurements the cylinder cover had to be dismantled, and this took considerable time - time during which the cylinder liner could obtain a more even temperature, corresponding to the temperature of the cooling water (about 80°C). When the temperature of the cylinder liner is measured together with the measurement of the diameter, it no longer matters for the accuracy of the diameter measurement whether the cylinder liner exhibits varying temperatures along its height, and thus there is no need for waiting with the diameter measurements until the liner is cooled to even temperature. Preferably the at least one second temperature sensor is located at one or both of the two projections.

In another embodiment of the present invention, which allows for an almost continuous measuring of the height position of the diameter gauge device within the cylinder liner, a height gauge device is used to measure the relative height and comprises a laser light source, a mounting device for fixing the height gauge device in a mounted position in a mounting hole for a fuel injector in the cylinder cover, and a mirror, which in the mounted position of the height gauge device reflects light emitted from the laser light source downwards in a direction essentially parallel to the central axis of the cylinder liner, which height gauge device obtains the measured distance as a second electronic parameter representative of the distance down to the diameter gauge device located on the piston in the cylinder liner. In another embodiment, the height gauge device is located on the diameter gauge device and comprises a laser light source emitting laser light in a direction upwards essentially parallel to the central axis of the cylinder liner, which height gauge device obtains the measured distance as a second electronic parameter representative of the distance up to the lower surface of the exhaust valve. Instead of a laser light source the height gauge device may comprise a source emitting microwaves or waves of other frequencies, like the ones used in radars or sonars, and a receiver for detecting the reflected wave and a processor for calculating the distance.

The use of measurements by means of a laser light source in combination with the measurements of the diameter gauge device provides for a more precise measuring of the cylinder liner diameter at many discrete positions than was possible with traditional measuring equipment that only provides for manual measurements at a rather few discrete, predetermined points. In practice, the height gauge device makes it possible to obtain a continuous or an approximated continuous measure of the cylinder liner diameter along the inner surface acting as slide surface for piston rings on the cylinder liner.

The present invention also relates to a flexible ring for use in the method of the invention. The flexible ring is annular and has, in an unfolded condition, an outer diameter that is smaller than a predetermined design inner diameter for the cylinder liner and an inner diameter larger than 30% of said design inner diameter, preferably at least 50% thereof.

By manufacturing the ring as an annular and flexible ring it is ascertained that the ring may easily be inserted through a scavenge air port and be placed on top of the piston. The flexible ring provides a clean surface on which the diameter gauge device may be supported and is typically made of flexible and robust material such as a 1 to 2 mm thick ring of silicone, PTFE, or a suitable plastics, such as PEHD or PDM. The material is also suitable to reflect a beam from the laser light source. This effect of the ring alleviates a problem that could otherwise arise when the piston crown has significant deposits of coke on the upper surface, as a surface with coke deposits will absorb light from the laser beam.

In the following, illustrative examples and embodiments of the present invention are described in further detail with reference to preferred embodiment illustrated by the schematic drawings, on which
Fig. 1 is a top view of a diameter gauge device according to the invention,
Fig. 2 is a side view of a height gauge device according to the invention,
Fig. 3 is a cross-sectional illustration of a two-stroke crosshead internal combustion engine,
Fig. 4 is a view seen from above of a diameter gauge device positioned in a cylinder liner,
Fig. 5a-5d are part-sectional side views of a cylinder with a diameter gauge device introduced inside the cylinder and a height gauge device used according to an embodiment of the invention.

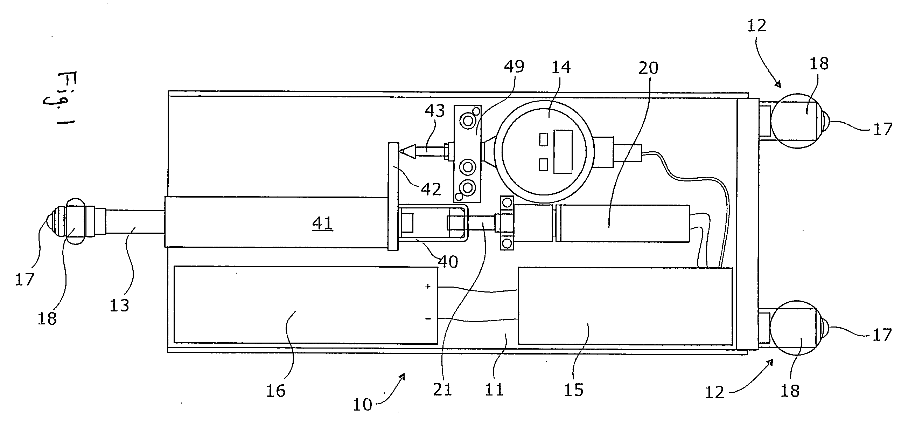

Fig. 1 illustrates an embodiment of a diameter gauge device 10 capable of measuring an inner diameter of a cylinder liner in a two-stroke crosshead internal combustion engine. The diameter gauge device 10 comprises a frame structure 11 having two projections 12 extending to one side of the frame structure and an elongate, spring loaded measuring arm 13 extending to the opposite side of the frame structure 11. The two projections 12 are essentially ball-shaped and serve as supporting points for the frame structure 11 on the surface of a piston crown and they also serve as abutment points 17 against the inner surface of the cylinder liner.

Measuring arm 13 is also provided with a ball shaped knob serving as abutment point 17 for abutting the inner surface of the cylinder liner. The two projections 12 and the measuring arm 13 may all be provided with a metal ball for abutting the cylinder liner wall. The measuring arm 13 is biased for displacement in direction away from the two projections 12 and is connected to an electronic meter 14 for measuring the displaced distance of the measuring arm 13 in relation to a predetermined design inner diameter for a cylinder liner. The electronic meter 14 is of the type VIGGO A. KJAER and is calibrated to measure the diameter with a precision within the range from 0.1 to 0.005 mm, typically 0.01 mm.

Measuring arm 13 is controlled to be in an inactive condition or in the active measuring condition by means of an actuator 20, which is controlled by an electronic circuit module 15 and powered by a battery 16. In the illustrated embodiment actuator 20 is designed as an electric motor driving a spindle 21 in a rotating motion. The end area of the spindle passes through an opening in a bracket 40 and carries an external threading threaded into a nut. The nut is rotationally fixed in bracket 40 and when the spindle is rotated the nut is crewed in or out on the spindle. The legs of bracket 40 are fixed to a transversely extending bar 42, which is fixed to an end area of measuring arm 13. The positions of the nut, the bracket 40 and the bar 42 illustrated in Fig. 1 correspond to the fully extended position of the measuring arm. When the spindle is rotated in the one direction the nut is displaced in direction of actuator 20 and as the nut bears against the bottom of U-shaped bracket 40 the bar 42 and the measuring arm with it are pulled towards actuator 20, and thus the measuring arm is retracted, and vice versa when the spindle is rotated in the other direction. The housing 41 is stationary with respect to frame structure 11. Measuring arm 13 is mounted in bearings in housing 41 so that it can slide in its length direction in relation to the housing. A compression spring is mounted around the arm and abuts with its inner end against an end wall of the housing and with its outer end against a spring guide fixed to the measuring arm 13. The spring thus biases the measuring arm for displacement out of the housing in a direction away from spindle 21. The end of the measuring arm projects out through an opening in the end wall of the housing and carries the transversely extending bar 42 fixed to the end area of the arm. In the inactive position of the measuring arm the compression spring bias the measuring arm out of the housing to and end position in which the outwards facing side of bar 42 rests against the inwards facing end surface of housing 41.

When actuator 20 displaces measuring arm 13 outwards and abutment point 17 contacts the inner surface of the cylinder liner the displacement movement of the measuring arm stops and during any further outwards displacement of an air gap is created between the nut and the bottom of U-shaped bracket 40, and the measuring arm 13 is released and in position for accurate measurement of the diameter of the cylinder liner. The actuator and spindle mechanism is provided with stop members (nor shown) that act to break the current to the actuator when the nut obtains predetermined outer end positions in its displacement movement.

An electronic meter 14 comprises a measuring pin 43, which is biased into abutment on the inwards facing surface of the transversely extending bar 42. The meter thus registers displacements of the measuring arm by measuring the current position of the transversely extending bar. A bracket 44 fixes the position of the housing of the meter in relation to the bottom plate in the device. When the measurements of diameters have been completed an activation signal is sent to electronic circuit module 15, which activates actuator 20 to displace housing 41 in the inward direction into abutment on transversely extending bar 42 and further on to the inactive position of measuring arm 13, in which both the housing and the arm are located at a distance away from the inner surface of the cylinder liner, so that the diameter gauge device may be manipulated and removed from the cylinder liner or be repositioned on the piston crown for measuring another set of diameters of the cylinder liner. The repositioning serves to allow measurements of diameters directed in the transverse direction of the engine as well as in the longitudinal direction of the engine.

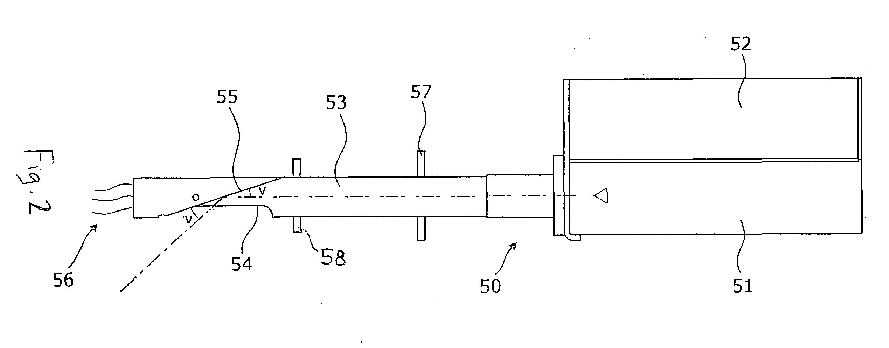

The electronic meter 14 is connected to an electronic circuit module 15 via an RS232 connection so as to transfer measured electronic parameters to a memory or to communicate the measured electronic parameters to a receiver device 50 (cf. Fig. 2). The electronic meter 14 and the electronic circuit module 15 are powered from a battery 16 mounted on the frame structure 11. The battery has a capacity of hours, such as about 8 hours corresponding to a working day. The electronic circuit module 15 comprises a full duplex transceiver unit such as a standard Bluetooth 2.0 module for communicating with the receiver device 50.

Furthermore, the diameter gauge device 10 comprises a first temperature sensor positioned on the frame structure 11 of for measuring the temperature of the diameter gauge device 10. Both the frame structure 11 and the measuring arm 13 are made of metal and the surrounding temperature may affect their lengths as the measuring arm 13 may be as long as 80 cm in order to measure the largest cylinder diameters.

The diameter gauge device 10 may also comprise a second temperature sensor for measuring the temperature of the inner surface of the cylinder liner, and preferably the at least one second temperature sensor is located at one or both of the two projections 12. However, in another embodiment the second temperature sensor is located on the frame structure 11 between the two projections 12 and may for instance be a spring blade temperature sensor.

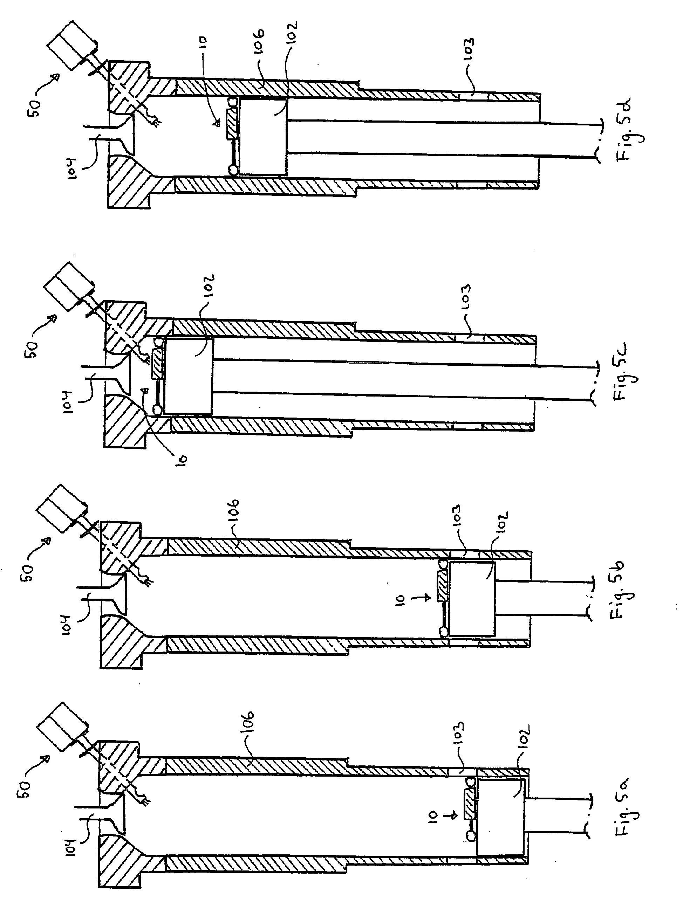

Fig. 2 illustrates a height gauge device 50 comprising a cylindrical metal tube 53 having at one end a laser light source 51, such as a commercially available product from Bosch, positioned next to an electronic circuit module 52. The laser light source is in position to emit a laser light source through the cylindrical metal tube 53 towards the opposite end having a transverse recess 54 provided with a mirror 55 for reflecting the laser light source. The free end of the cylindrical metal tube 53 is provided with an antenna 56 adapted to send and receive signals to and from diameter gauge device 10. The wireless communication is controlled by the electronic circuit module 52, which also collects the received measurements. A mounting fixture 58 is fixed to and extends from the cylindrical metal tube 53 and is adapted to keep the height gauge device 50 in the correct position during use. Metal tube 53 is also provided with a guide 57 which helps to steer the device during insertion and mounting. The height gauge device is adapted to be mounted in a mounting hole for a fuel injector in the cylinder cover as shown in principle in Figs. 5a-5d. The actual angle between the length direction of the metal tube and the vertical direction depends on the direction of the mounting hole, and the angle may typically be in the range of 10 to 20°.

In a mounted position of the height gauge device 50 the mirror 55 reflects light emitted from the laser light source 51 downwards in a direction essentially parallel to the central axis of the cylinder liner 106 and offset in the radial direction of the liner. The light emitted is reflected at the surface of the piston 102 or at the surfaces of the diameter gauge device, and thereby the height gauge device 50 obtains a measure of the distance down to the diameter gauge device 10 located on the piston 102 in the cylinder liner 106 (Fig. 5a).

The actually measured distance is calibrated by measuring the height in a well-defined position of the piston 102 such as in the BDC position. This calibration may be used to compensate for coke deposits and the thickness of an annular ring on which the diameter gauge device 10 is positioned. This calibration or compensation may be made in an external computer connected to the electronic circuit module 52 by a wireless or a cable connection, or it may be manually calculated on basis of stored values obtained during the measuring procedure.

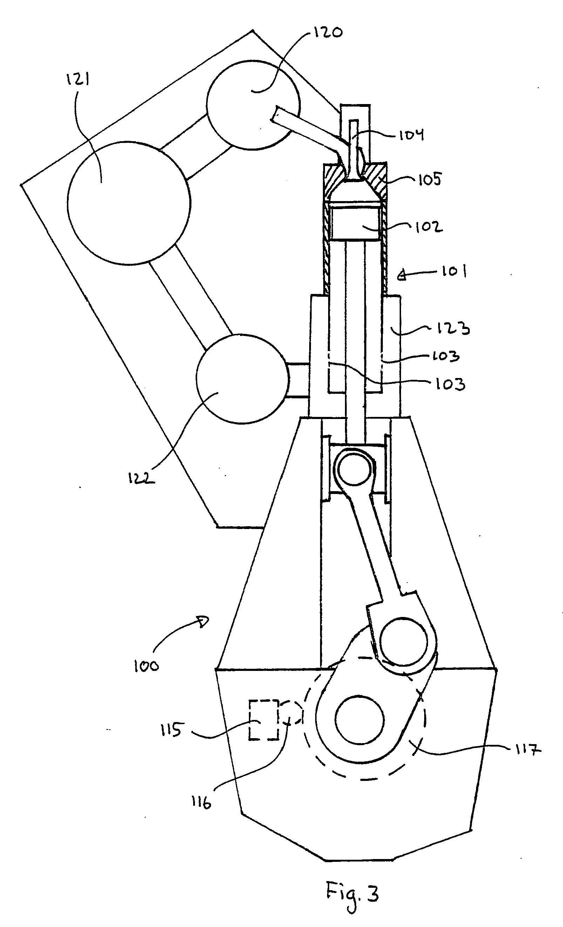

Fig. 3 illustrates a two-stroke crosshead internal combustion engine 100 such as a two-stroke engine of the make MAN Diesel SE and the type ME or MC, or of the make Wärtsilä and the type RTA or RT-flex. The engine has a plurality of cylinders, such as from four to 14 cylinders, and in the individual cylinder 101 a piston 102 is movable between a top dead centre position TDC and a bottom dead centre position BDC. In the BDC position the top of the piston is located just below a circumferential row of scavenge air ports 103 in the lower part of the cylinder liner 106 in cylinder 101. The inner diameter of the cylinders may be in the range from 250 to 1100 mm, and the diameter gauge device is apart from use to measure cylinders of the larger diameters also useful for measuring cylinders of smaller diameters, such as cylinder diameters in one or more of the following ranges: from 250 mm to 350 mm, from 250 mm to 400 mm, from 250 mm to 420 mm, from 250 mm to 460 mm, from 250 mm to 500 mm, and from 250 mm to 600 mm. Typical sizes of an individual scavenge air port is as given in the following Table 1.

**Table 1**

| Inner diameter of cylinder liner | Port width | Port height |
|---|---|---|
| 350 mm | 32 mm | 108 mm |
| 400 mm | 36 mm | 123 mm |
| 500 mm | 40 mm | 123 mm |
| 800 mm | 64 mm | 185 mm |

With a height of 30 mm or less and a width of 100 mm or less the diameter gauge device may be introduced through all the variously sized scavenge air ports. Naturally, the diameter gauge device may be made in other dimensions, and also in various sizes where the individual model of the diameter gauge device is adapted to the port size in an actual engine.

In Fig. 3 piston 102 is in a position near the TDC position. A cylinder cover 105 closes the cylinder at the upper end of the cylinder liner 106, and an exhaust valve 104 is mounted in a housing in a central position of the cylinder. When the exhaust valve 104 during operation is in open position, exhaust gas from the combustion chamber flows through the exhaust passage into an exhaust gas receiver 120. The exhaust gas flows trough the compressor part of a turbo charger 121, which delivers compressed inlet and scavenging air to charge air receiver 122 that feeds compressed air to a chamber 123 surrounding the scavenge air ports 103 of the cylinder 101.

When the engine is stopped and in out of operation condition the crankshaft of the engine may be turned by means of an electric motor 115, which via a turning gear 116 may be engaged with a turning wheel 117, which is connected with the crankshaft, typically by being mounted on the thrust shaft of the engine. As the crankshaft of the engine is slowly turned by the electric motor 115 the piston moves up or down within the cylinder liner. The turning operation may be controlled manually, such as by pushing activation buttons, or it may be programmed in a stored procedure suitable for performing the diameter measurements pertaining to the present invention. During the turning the exhaust valve is preferably held in open position.

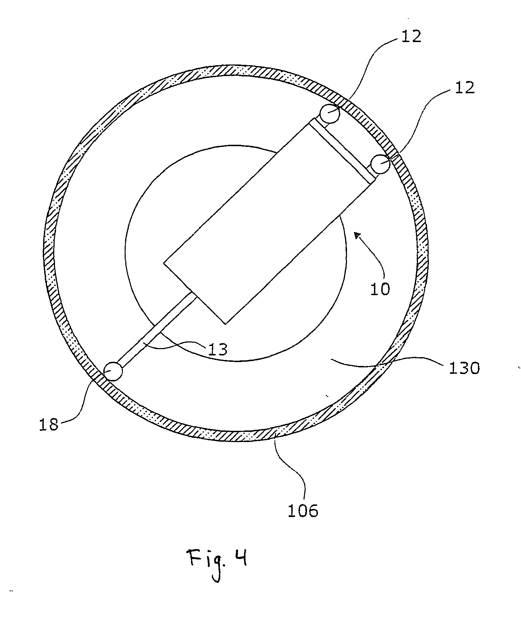

When the engine has been stopped and thus taken out of operation a side door in the cylinder section pertaining to the cylinder to be measured is opened in order to provide access to the space surrounding the lower portion of the cylinder liner. The engine is turned with the turning gear until the upper surface of the piston is located below the row of scavenge air ports, viz. the piston is at or in the BDC position as illustrate in Fig. 5a. The side door is located next to the scavenge air ports 103. The diameter gauge device 10 is then manipulated by inserting it through one of the scavenge air ports 103 while it is held with the bottom surface oriented vertically, and when inside cylinder liner 106 the device is turned and positioned on top of piston 102 as shown in Figs. 4 and 5a.

If desirable, an annular ring 130 is inserted through a scavenge air port prior to the insertion of the device and is placed on top of the piston. The ring is flexible so that it may be folded together during the insertion. When unfolded the ring fits on top of the cylinder crown because it has an outer diameter that is smaller than the inner diameter of the cylinder liner. The ring may in one embodiment be a circular sheet of material covering the entire piston, but in order to facilitate the introduction and the placement of the ring, it preferably has an inner diameter larger than 50% of said design inner diameter, as this reduces the amount of material of the ring. The ring is of a suitable flexible material, such as PTFE or plastic. If necessary, coke deposits on the piston may be levelled out or removed in the areas of support for the diameter gauge device 10 before the ring or the diameter gauge device is placed on top of the piston.

In Fig. 5a the diameter gauge device 10 has been placed on top of the piston 102. The diameter gauge device 10 is positioned on the top of the piston 102 with the two protrusions 12 close to the outer rim of the piston 102. When insertion of the ring and/or the device has been completed the crankshaft of the engine may be turned so that the piston is moved upwards to a position where the upper surface of the piston is near the upper ends of the scavenge air ports, as illustrated in Fig. 5b.

The actuator 20 is then activated to position the measuring arm in the active position where the bias on the measuring arm pushes the two projections 12 into abutment against the one side of the inner surface of the cylinder liner and the transversely extending bar 42 is released from abutment on housing 41 so that meter 14 is active for detecting and measuring the actual diameter of the cylinder liner. This activation of actuator 20 may be effected by a time delay device, which performs the activation after a certain preset duration after the diameter gauge device has been placed in position on top of the piston, such as after 3 minutes, which allows for the turning of the crankshaft, or the activation of the actuator may be caused by a control signal emitted to the electronic circuit module 15. The control signal may e.g. be emitted via a transmitter in the height gauge device, if such is used.

Following this activation the diameter gauge device 10 performs measurements of the inner diameter in the cylinder liner. During these measurements the engine is turned and the piston 102 with the diameter gauge device 10 is moved towards the TDC position as shown in Fig. 5c. The diameter gauge device 10 measures the cylinder liner diameter D as electronic parameters representing the cylinder liner diameter. If the space in the combustion chamber above the piston is insufficient to accommodate the diameter gauge device when the piston is in the TDC position, the turning is stopped before the piston attains this position.

After completed measurements the turning the crankshaft is performed in such a manner that the piston is lowered in the cylinder. An intermediate position is illustrated in Fig. 5c. The diameter measurements may also be performed during the downward movement of the piston, and this double measuring allows for checking of the measured data. The measurements may be performed in short intervals, such as once every second. This allows for an almost continuous measuring of the cylinder diameter, because the piston movement is slow.

It is desirable to measure the cylinder liner diameter along the length of the cylinder in both transverse and longitudinal directions of the cylinder liner with respect to the ship. One way to perform measurements in both transverse and longitudinal directions of the length of the cylinder liner with respect to the ship is to manually shift the diameter gauge device 10 to another position when the piston again reaches the position depicted in Fig. 5a. The manual shifting involves a turning of the device through about 90 degrees about the vertical axis of the cylinder liner. Hence, during a first measurement cycle, the diameter gauge device 10 is placed on the piston 102 along for instance the longitudinal direction of the ship, and during a second measurement cycle the diameter gauge device 10 is positioned along the transversal direction of the ship. Alternatively, the diameter gauge device 10 may be shifted between the two positions by means of wheels and an actuator mounted on the diameter gauge device 10. By making the shift when for instance the piston reaches the TDC position, a complete measurement of the cylinder liner diameter in the two directions may be measured during only a single cycle of turning the engine corresponding to a movement of the piston 102 from a start position towards the TDC position and back again to the start position.

If a height gauge device 50 is used, the height gauge device may automatically detect when the piston 102 has obtained the position shown in Fig. 5b, and the height gauge device 50 may then automatically emit a signal for activating the diameter gauge device for initiation of measurements. The signal is received by the transceiver of the electronics circuit module 15 whereby the measuring arm 13 placed in the active position for measurements. While the engine is turned, the inner diameter of cylinder liner is measured by the diameter gauge device and the first electronic parameters are either stored in a memory in the device or transmitted to the height gauge device, which transfers the first electronic parameters received to a computer together with the corresponding second electronic parameters.

During the measurements of the diameter the height gauge device measures the height, i.e. the position of the piston and the height measurements and the measurements received from the diameter gauge device 10 are stored in the electronic circuit module or directly communicated to an external computer, as mentioned. In a preferred embodiment a measurement of the diameter gauge device 10 is forwarded to the height gauge device 10. Any temperature measurements made may at the same time be stored or communicated.

Hence, during measuring of the cylinder the measurements of the cylinder liner diameter and the corresponding heights are paired and either stored in electronic circuit module 52 for later use or the pair of measured parameters of the cylinder liner diameter and the corresponding height are directly communicated to an external computer by the electronic circuit module 52.

The diameter gauge device may be supplemented with other means for reporting on the condition of the inner surface of the cylinder liner. It is thus as an example possible to mount a camera or a photo device on the diameter gauge device so that photographs may be taken of the inner surface. The photos may be utilized to evaluate the condition of the running surface, that is, the inner surface of the cylinder liner that is swept by the piston rings on the piston. Early warning of excessive wear is thus detectable, such as by observing colour changes on the inner surface of the cylinder liner.

In an alternative embodiment the diameter gauge device may comprise a distance measuring device based on measurement by laser beam. It is well-known to use devices emitting laser light for distance measurements. The laser device may be mounted on a frame supported at three points or more like the above-described diameter gauge device. The laser distance measuring device may emit laser beams in two opposed directions, so that it only need to the located on top of the piston in a position at a distance from the inner surface of the cylinder liner in order to perform the measurements. The laser device may be mounted on a vertical shaft extending from a position at the middle of the housing of the device, so that the laser device can emit laser beams in mainly horizontal directions while the laser device is placed on top of the piston crown. With such a positioning of the laser device on top of the piston crown it is possible to use an electric drive motor to rotate the laser device while the measurements are performed. In this manner it is possible to continuously detect the inner diameter of the cylinder liner almost over its entire inner surface, because the laser beams scan the inner surface of the cylinder liner in a spiralling movement while the piston is moved upwards within the cylinder liner. The measured first electronic parameters may be stored in a memory or may be transmitted to a receiver, such as a receiver on a height gauge device of one of the above-mentioned kinds.

Both in connection with the diameter gauge device 10 comprising the laser device, and in connection with the diameter gauge device having a measuring arm 13 of the mentioned kind, it is possible to obtain the position of the piston in the height direction of the cylinder liner 106 based on values for the turning position of the crankshaft. As mentioned, there is a definite correlation between the position of the piston within the cylinder and the turning angle of the crankshaft. Based on this relationship the height position of the piston may be calculated from information of which turning angle corresponds to the BDC position of the piston (a reference value), and the actual turning angle of the crankshaft when the diameter measurement is performed.

The various embodiments described above may be combined into other embodiments, and it is furthermore possible to design specific features in other manner within the scope of the claims. As one example the height gauge device may be located inside the engine in an area below the crosshead and use a measuring of the position in height of the crosshead or a crosshead shoe, and then this distance measurement can by calculation be converted into a position in height of the piston within the cylinder liner.

## Claims

1. Method of measuring cylinder liner diameter in a two-stroke crosshead internal combustion engine (100) where the engine is taken out of operation, a diameter gauge device (10) is introduced into the cylinder liner (106) through a scavenge air port (103) in the cylinder liner and is placed in a measuring position, at which the inner diameter of the cylinder liner is measured, **characterized in that** the engine is a long-stroke engine where the relationship between stroke (S) and bore (B), (S/B), is at least 2.4, that the top of the piston (102) in the bottom dead centre position is located just below scavenge air ports (103) in a lower portion of the cylinder liner, that the diameter gauge device (10) is placed on top of the piston (102) and is moved up past the scavenging air ports in the height direction of the cylinder liner (106) by turning the crankshaft of the engine, that the diameter gauge device (10) is shifted to at least one another position along the length of the cylinder liner, which one another position is in an upper portion of the cylinder liner (106) at a top dead centre position of the piston (102), that the diameter gauge device performs measurement of the inner diameter of the cylinder liner at said one another position, that the diameter gauge device (10) in the individual measuring positions obtains the measured diameter as a first electronic parameter representative of the diameter, and that the corresponding height position of the diameter gauge device within the cylinder is measured.

2. Method according to claim 1, **characterized in that** a height gauge device (50) is used to measure the position of the diameter gauge device (10) within the cylinder liner (106), which height gauge device obtains the measured distance as a second electronic parameter representative of the distance.

3. Method according to claim 2, **characterized in that** a plurality of corresponding value pairs for the first electronic parameter and the second electronic parameter are recorded, preferably as stored values in a memory.

4. Method according to claim 2 or 3, **characterized in that** the height gauge device (50) measures the height from the position of the diameter gauge device within the cylinder liner to the lower surface of the exhaust valve (104).

5. Method according to claim 2 or 3, **characterized in that** the height gauge device (50) measures the height down to the position of the diameter gauge device (10) within the cylinder liner (106).

6. Method according to claim 5, **characterized in that** a fuel injector on a cylinder cover (105) of the cylinder is removed and the height gauge device (50) is introduced inside the cylinder via the mounting hole for the fuel injector, and preferably the height gauge device is provided with a receiver receiving signals emitted from a transmitter in the diameter gauge device.

7. Method according to any of the claims 1 to 6, **charac** - **terized** in that the position of the piston in the height direction of the cylinder is obtained on basis of the associated turning angle of the crankshaft of the engine in relation to the turning angle of the crankshaft corresponding to a position of the piston in either top dead centre position (TDC) or bottom dead centre position (BDC).

8. A diameter gauge device for measuring the cylinder liner inner diameter in a two-stroke crosshead internal combustion engine (100), which diameter gauge device (10) comprises a frame structure (11) having two projections (12) extending to one side of the frame structure and an elongate measuring arm (13) extending to the opposite side of the frame structure (11), which measuring arm is biased for displacement in direction away from the two projections (12) and is connected to a meter (14) that measures the displaced distance of the measuring arm in relation to a predetermined design inner diameter for the cylinder liner, **characterized in that** the measuring arm (13) is associated with a drive (20) for retracting the measuring arm to a withdrawn, inactive position for insertion of the diameter gauge device through a scavenging air port and placement on top of a piston, that the drive (20) is electronically controlled to displace the measuring arm (13) to the inactive position or to place the measuring arm in an extended position, after movement of the diameter gauge device up past the area of the scavenging air ports, in which extended position the bias on the measuring arm in direction away from the two projections (12) is active, that the meter (14) comprises means for converting the position of the measuring arm (13), when in the extended position, into a first electronic parameter representative of the diameter, and that the diameter gauge device (10) comprises a first temperature sensor for measuring the temperature of the diameter gauge device.

9. A diameter gauge device according to claim 8, **charac** - **terized** in that the meter (14) is calibrated to measure the diameter with a precision within the range from 0.1 to 0.005 mm, when the inner diameter of the cylinder liner (106) is in the range from 250 mm to 1100 mm.

10. A diameter gauge device according to claim 8 or 9, **characterized in that** that the diameter gauge device (10) comprises at least one second temperature sensor for measuring the temperature of the inner surface of the cylinder liner (106), and preferably the at least one second temperature sensor is located at one or both of the two projections (12).

11. A diameter gauge device according to any of claims 8 to 10, **characterized in that** a height gauge device (50) comprises a laser light source (51), a mounting device (53) for fixing the height gauge device in a mounted position in a mounting hole for a fuel injector in the cylinder cover, and a mirror (55), which in the mounted position of the height gauge device reflects light emitted from the laser light source (51) downwards in a direction essentially parallel to the central axis of the cylinder liner (106), which height gauge device (50) comprises means for obtaining the measured distance as a second electronic parameter representative of the distance down to the diameter gauge device located on the piston in the cylinder liner (106).

12. A diameter gauge device according to any of claims 8 to 11, **characterized in that** a height gauge device (50) is located on the diameter gauge device (10) and comprises a laser light source (51) emitting laser light in a direction upwards essentially parallel to the central axis of the cylinder liner (106), which height gauge device (50) comprises means for obtaining the measured distance as a second electronic parameter representative of the distance up to the lower surface of the exhaust valve.

## Patentansprüche

1. Verfahren zum Messen des Zylinderlaufbuchsendurchmessers in einem Zweitakt-Kreuzkopf-Verbrennungsmotor (100), wobei der Motor außer Betrieb genommen wird, eine Durchmessermessvorrichtung (10) in die Zylinderlaufbuchse (106) durch eine Ladeluftöffnung (103) in der Zylinderlaufbuchse eingeführt und in eine Messposition platziert wird, an welcher der Innendurchmesser der Zylinderlaufbuchse gemessen wird, **dadurch gekennzeichnet, dass** der Motor ein Langhubmotor ist, bei welchem die Beziehung zwischen Hub (S) und Bohrung (B), (S/B), mindestens 2,4 beträgt, dass die Oberseite des Kolbens (102) in der unteren Totpunktposition gleich unter Ladeluftöffnungen (103) in einem unteren Abschnitt der Zylinderlaufbuchse liegt, dass die Durchmessermessvorrichtung (10) auf die Oberseite des Kolbens (102) platziert und an den Ladeluftöffnungen vorbei in die Höhenrichtung der Zylinderlaufbuchse (106) bewegt wird, indem die Kurbelwelle des Motors gedreht wird, dass die Durchmessermessvorrichtung (10) zu mindestens einer anderen Position entlang der Länge der Zylinderlaufbuchse verlagert wird, wobei diese eine andere Position in einem oberen Abschnitt der Zylinderlaufbuchse (106) an einer oberen Totpunktposition des Kolbens (102) ist, dass die Durchmessermessvorrichtung die Messung des Innendurchmessers der Zylinderlaufbuchse an dieser einen anderen Position ausführt, dass die Durchmessermessvorrichtung (10) in den einzelnen Messpositionen den gemessenen Durchmesser als einen ersten elektronischen Parameter erzielt, der für den Durchmesser repräsentativ ist, und dass die entsprechende Höhenposition der Durchmessermessvorrichtung innerhalb des Zylinders gemessen wird.

2. Verfahren nach Anspruch 1, **dadurch gekennzeichnet, dass** eine Höhenmessvorrichtung (50) verwendet wird, um die Position der Durchmessermessvorrichtung (10) innerhalb der Zylinderlaufbuchse (106) zu messen, wobei die Höhenmessvorrichtung die gemessene Entfernung als einen zweiten elektronischen Parameter, der für die Entfernung repräsentativ ist, erzielt.

3. Verfahren nach Anspruch 2, **dadurch gekennzeichnet, dass** eine Vielzahl entsprechender Wertepaare für den ersten elektronischen Parameter und den zweiten elektronischen Parameter aufgezeichnet wird, vorzugsweise als in einem Speicher gespeicherte Werte.

4. Verfahren nach Anspruch 2 oder 3, **dadurch gekennzeichnet, dass** die Höhenmessvorrichtung (50) die Höhe aus der Position der Durchmessermessvorrichtung innerhalb der Zylinderlaufbuchse zu der unteren Oberfläche des Abgasventils (104) misst.

5. Verfahren nach Anspruch 2 oder 3, **dadurch gekennzeichnet, dass** die Höhenmessvorrichtung (50) die Höhe hinunter zu der Position der Durchmessermessvorrichtung (10) innerhalb der Zylinderlaufbuchse (106) misst.

6. Verfahren nach Anspruch 5, **dadurch gekennzeichnet, dass** ein Kraftstoffinjektor auf einem Zylinderdeckel (105) des Zylinders abgenommen und die Höhenmessvorrichtung (50) in den Zylinder über die Montagebohrung für den Kraftstoffinjektor eingeführt wird, und dass die Höhenmessvorrichtung vorzugsweise mit einem Empfänger versehen ist, der Signale empfängt, die von einem Transmitter in der Durchmessermessvorrichtung gesendet werden.

7. Verfahren nach einem der Ansprüche 1 bis 6, **dadurch gekennzeichnet, dass** die Position des Kolbens in die Höhenrichtung des Zylinders auf der Grundlage des dazugehörenden Drehwinkels der Kurbelwelle des Motors in Bezug zu dem Drehwinkel der Kurbelwelle, die einer Position des Kolbens entweder in der oberen Totpunktposition (TDC) oder unteren Totpunktposition (BDC) entspricht, erzielt wird.

8. Durchmessermessvorrichtung zum Messen des Zylinderlaufbuchseninnendurchmessers in einem Zweitakt-Kreuzkopf-Verbrennungsmotor (100), wobei die Durchmessermessvorrichtung (10) eine Rahmenstruktur (11) aufweist, die zwei Vorsprünge (12) hat, die sich zu einer Seite der Rahmenstruktur erstrecken, und einen länglichen Messarm (13), der sich zu der entgegengesetzten Seite der Rahmenstruktur (11) erstreckt, wobei der Messarm zur Bewegung in Richtung von den zwei Vorsprüngen (12) weg vorgespannt und mit einem Messgerät (14) verbunden ist, das die Bewegungsentfernung des Messarms in Bezug zu einem vorbestimmten Konzeptionsinnendurchmesser für die Zylinderlaufbuchse misst, **dadurch gekennzeichnet, dass** der Messarm (13) mit einem Antrieb (20) zum Zurückziehen des Messarms zu einer zurückgezogenen inaktiven Position zum Einfügen der Durchmessermessvorrichtung durch eine Ladeluftöffnung und Platzieren auf der Oberseite eines Kolbens verbunden ist, dass der Antrieb (20) elektronisch gesteuert wird, um den Messarm (13) zu der inaktiven Position zu verlagern oder den Messarm in einer gestreckten Position zu platzieren, nachdem sich die Durchmessermessvorrichtung an dem Bereich der Ladeluftöffnungen vorbei bewegt hat, wobei die Vorspannung des Messarms in der gestreckten Position in Richtung von den zwei Vorsprüngen (12) weg aktiv ist, dass das Messgerät (14) Mittel zum Umwandeln der Position des Messarms (13), wenn er sich in der gestreckten Position befindet, in einen ersten elektronischen Parameter, der für den Durchmesser repräsentativ ist, aufweist, und dass die Durchmessermessvorrichtung (10) einen ersten Temperatursensor aufweist, der Mittel zum Erzielen der Messung der Temperatur der Durchmessermessvorrichtung aufweist.

9. Durchmessermessvorrichtung nach Anspr u c h 8, **dadurch gekennzeichnet, dass** das Messgerät (14) kalibriert ist, um den Durchmesser mit einer Präzision in dem Bereich von 0,1 bis 0,005 mm zu messen, wenn der Innendurchmesser der Zylinderlaufbuchse (106) in dem Bereich von 250 mm bis 1100 mm ist.

10. Durchmessermessvorrichtung nach Anspruch 8 oder 9, **dadurch gekennzeichnet, dass** die Durchmessermessvorrichtung (10) mindestens einen zweiten Temperatursensor zum Messen der Temperatur der Innenoberfläche der Zylinderlaufbuchse (106) aufweist, und dass sich der mindestens eine zweite Temperatursensor vorzugsweise an einem oder beiden der Vorsprünge (12) befindet.

11. Durchmessermessvorrichtung nach einem der Ansprüche 8 bis 10, **dadurch gekennzeichnet, dass** die Höhenmessvorrichtung (50) eine Laserlichtquelle (51), eine Montagevorrichtung (53) zum Befestigen der Höhenmessvorrichtung in einer montierten Position in einer Montagebohrung für einen Kraftstoffinjektor in dem Zylinderdeckel, und einen Spiegel (55), der in der montierten Position der Höhenmessvorrichtung Licht reflektiert, das von der Laserlichtquelle (51) nach unten in eine Richtung im Wesentlichen parallel zu der zentralen Achse der Zylinderlaufbuchse (106) gesendet wird, aufweist, wobei die Höhenmessvorrichtung (50) Mittel zum Erzielen der gemessenen Entfernung als einen zweiten elektronischen Parameter aufweist, der für d i e E n t f e r n u n g h i n u n t e r zu d e r Durchmessermessvorrichtung, die sich auf dem Kolben in der Zylinderlaufbuchse (106) befindet, repräsentativ ist.

12. Durchmessermessvorrichtung n a c h einem der Ansprüche 8 bis 11, **dadurch gekennzeichnet, dass** sich eine Höhenmessvorrichtung (50) auf der Durchmessermessvorrichtung (10) befindet und eine Laserlichtquelle (51) aufweist, die Laserlicht in eine Richtung aufwärts im Wesentlichen parallel zu der zentralen Achse der Zylinderlaufbuchse (106) sendet, wobei die Höhenmessvorrichtung (50) Mittel zum Erzielen der gemessenen Entfernung als einen zweiten elektronischen Parameter, der für die Entfernung hinauf zu der unteren Oberfläche des Abgasventils repräsentativ ist, aufweist.

## Revendications

1. Procédé de mesure du diamètre du revêtement interne d'un cylindre dans un moteur à combustion interne (100) à deux temps à crosse, dans lequel le moteur est mis hors service, un dispositif de jauge du diamètre (10) est introduit dans le revêtement interne (106) du cylindre à travers un orifice d'air d'évacuation (103) dans le revêtement interne du cylindre et est placé dans une position de mesure, à laquelle le diamètre intérieur du revêtement interne du cylindre est mesuré, **caractérisé en ce que** le moteur est un moteur à longue course, dans lequel la relation entre la course (S) et l'alésage (B), (S/B), est d'au moins 2,4, **en ce que** le dessus du piston (102) dans la position de point mort bas est situé juste en dessous d'orifices d'air d'évacuation (103) dans une portion inférieure du revêtement interne du cylindre, **en ce que** le dispositif de jauge du diamètre (10) est placé sur le dessus du piston (102) et est déplacé au-delà des orifices d'air d'évacuation dans la direction de la hauteur du revêtement interne (106) du cylindre en faisant tourner le vilebrequin du moteur, **en ce que** le dispositif de jauge du diamètre (10) est déplacé dans au moins une autre position le long de la longueur du revêtement interne du cylindre, ladite autre position étant dans une portion supérieure du revêtement interne (106) du cylindre au niveau d'une position de point mort haut du piston (102), **en ce que** le dispositif de jauge du diamètre effectue une mesure du diamètre intérieur du revêtement interne du cylindre au niveau de ladite une autre position, **en ce que** le dispositif de jauge du diamètre (10) dans les positions de mesure individuelles obtient le diamètre mesuré sous forme d'un premier paramètre électronique représentatif du diamètre, et **en ce que** la position en hauteur correspondante du dispositif de jauge du diamètre à l'intérieur du cylindre est mesurée.

2. Procédé selon la revendication 1, **caractérisé en ce qu'**un dispositif de jauge de hauteur (50) est utilisé pour mesurer la position du dispositif de jauge du diamètre (10) à l'intérieur du revêtement interne (106) du cylindre, lequel dispositif de jauge de hauteur obtient la distance mesurée sous la forme d'un deuxième paramètre électronique représentatif de la distance.

3. Procédé selon la revendication 2, **caractérisé en ce qu'**une pluralité de paires de valeurs correspondantes pour le premier paramètre électronique et pour le deuxième paramètre électronique sont enregistrées, de préférence sous forme de valeurs stockées dans une mémoire.

4. Procédé selon l'une quelconque des revendications 2 ou 3, **caractérisé en ce que** le dispositif de jauge de hauteur (50) mesure la hauteur depuis la position du dispositif de jauge du diamètre à l'intérieur du revêtement interne du cylindre jusqu'à la surface inférieure de la soupape d'échappement (104).

5. Procédé selon l'une quelconque des revendications 2 ou 3, **caractérisé en ce que** le dispositif de jauge de hauteur (50) mesure la hauteur jusqu'à la position du dispositif de jauge du diamètre (10) à l'intérieur du revêtement interne (106) du cylindre.

6. Procédé selon la revendication 5, **caractérisé en ce qu'**un injecteur de carburant sur un couvercle de cylindre (105) du cylindre est enlevé et le dispositif de jauge de hauteur (50) est introduit à l'intérieur du cylindre par le biais du trou de montage pour l'injecteur de carburant, et de préférence le dispositif de jauge de hauteur est muni d'un récepteur recevant des signaux émis par un émetteur dans le dispositif de jauge du diamètre.

7. Procédé selon l'une quelconque des revendications 1 à 6, **caractérisé en ce que** la position du piston dans la direction en hauteur du cylindre est obtenue sur la base de l'angle de rotation associé du vilebrequin du moteur par rapport à l'angle de rotation du vilebrequin correspondant à une position du piston dans la position de point mort haut (PMH) ou dans la position de point mort bas (PMB).

8. Dispositif de jauge du diamètre pour mesurer le diamètre intérieur du revêtement interne du cylindre dans un moteur à combustion interne (100) à deux temps à crosse, lequel dispositif de jauge du diamètre (10) comprend une structure de cadre (11) ayant deux saillies (12) s'étendant vers un côté de la structure de cadre et un bras de mesure allongé (13) s'étendant vers le côté opposé de la structure de cadre (11), lequel bras de mesure est précontraint de manière à se déplacer dans une direction l'éloignant des deux saillies (12) et est connecté à un dispositif de mesure (14) qui mesure la distance de déplacement du bras de mesure par rapport à un diamètre intérieur de conception prédéterminée pour le revêtement interne du cylindre, **caractérisé en ce que** le bras de mesure (13) est associé à un entraînement (20) pour faire rentrer le bras de mesure dans une position rentrée inactive pour l'insertion du dispositif de jauge du diamètre à travers un orifice d'air d'évacuation et son positionnement au-dessus d'un piston, **en ce que** l'entraînement (20) est commandé électroniquement de manière à déplacer le bras de mesure (13) dans la position inactive ou à placer le bras de mesure dans une position étendue, après le mouvement du dispositif de jauge du diamètre jusqu'au-delà de la zone des orifices d'air d'évacuation, dans laquelle position étendue la précontrainte sur le bras de mesure dans la direction l'éloignant des deux saillies (12) est active, **en ce que** le dispositif de mesure (14) comprend un moyen pour convertir la position du bras de mesure (13), lorsqu'il est dans la position étendue, en un premier paramètre électronique représentatif du diamètre, et **en ce que** le dispositif de jauge du diamètre (10) comprend un premier capteur de température pour mesurer la température du dispositif de jauge du diamètre.

9. Dispositif de jauge du diamètre selon la revendication 8, **caractérisé en ce que** le dispositif de mesure (14) est étalonné de manière à mesurer le diamètre avec une précision dans la plage de 0,1 à 0,005 mm, lorsque le diamètre intérieur du revêtement interne (106) du cylindre est dans la plage de 250 mm à 1100 mm.

10. Dispositif de jauge du diamètre selon la revendication 8 ou 9, **caractérisé en ce que** le dispositif de jauge du diamètre (10) comprend au moins un deuxième capteur de température pour mesurer la température de la surface interne du revêtement interne (106) du cylindre, et de préférence l'au moins un deuxième capteur de température est situé au niveau de l'une et/ou de l'autre des deux saillies (12).

11. Dispositif de jauge du diamètre selon l'une quelconque des revendications 8 à 10, **caractérisé en ce qu'**un dispositif de jauge de hauteur (50) comprend une source de lumière laser (51), un dispositif de montage (53) pour fixer le dispositif de jauge de hauteur dans une position montée dans un trou de montage pour un injecteur de carburant dans le couvercle du cylindre, et un miroir (55) qui, dans la position montée du dispositif de jauge de hauteur, reflète la lumière émise par la source de lumière laser (51) vers le bas dans une direction essentiellement parallèle à l'axe central du revêtement interne (106) du cylindre, lequel dispositif de jauge de hauteur (50) comprend un moyen pour obtenir la distance mesurée sous forme d'un deuxième paramètre électronique représentatif de la distance jusqu'au dispositif de jauge du diamètre situé sur le piston dans le revêtement interne (106) du cylindre.

12. Dispositif de jauge du diamètre selon l'une quelconque des revendications 8 à 11, **caractérisé en ce qu'**un dispositif de jauge de hauteur (50) est situé sur le dispositif de jauge du diamètre (10) et comprend une source de lumière laser (51) émettant de la lumière laser dans une direction vers le haut essentiellement parallèlement à l'axe central du revêtement interne (106) du cylindre, lequel dispositif de jauge de hauteur (50) comprend un moyen pour obtenir la distance mesurée sous forme d'un deuxième paramètre électronique représentatif de la distance jusqu'à la surface inférieure de la soupape d'échappement.
